# EUROPÄISCHE PATENTSCHRIFT

(11) **EP 2 190 733 B1**
(45) Veröffentlichungstag und Bekanntmachung des Hinweises auf die Patenterteilung: **19.01.2011**
(21) Anmeldenummer: 08786126.6
(22) Anmeldetag: 14.07.2008
(51) Int. Cl.: B64B 1/50, B66C 13/04

(54) **VERFAHREN UND ANORDNUNG ZUM TRANSPORT VON LANGGESTRECKTEN, SPERRIGEN GÜTERN**
METHOD AND ARRANGEMENT FOR TRANSPORTING OF ELONGATED, BULKY PRODUCTS
PROCÉDÉ ET DISPOSITIF DE TRANSPORT DE BIENS ALLONGÉS, VOLUMINEUX

(30) Priorität: 12.09.2007 DE 102007043426
(43) Veröffentlichungstag der Anmeldung: 02.06.2010
(73) Patentinhaber: CL CargoLifter GmbH & Co. KG a .A., 14057 Berlin (DE)
(72) Erfinder: VON KESSEL, Christoph, 14532 Kleinmachnow (DE); HOERMANN, Mirko, 59368 Werne (DE); GOLDAMMER, Thomas, 99427 Weimar (DE); FREIHERR VON GABLENZ, Carl, 14057 Berlin (DE)
(74) Vertreter: Gulde Hengelhaupt Ziebig & Schneider
(86) Internationale Anmeldenummer: PCT/EP2008/059170
(87) Internationale Veröffentlichungsnummer: WO 2009/033853

(56) Entgegenhaltungen:
- EP-A- 0 579 219
- WO-A-00/66424
- WO-A-98/34823
- GB-A- 973 378
- GB-A- 191 420 119

## Beschreibung

Die Erfindung betrifft ein Verfahren und eine Anordnung zum Transport von langgestreckten, sperrigen Gütern, insbesondere von Flügeln für Windkraftanlagen, mit einem seilgeführten Auftriebskörper.

Allgemein bekannt ist der Transport von langgestreckten, sperrigen Gütern mittels Sattelschleppern. Ein solcher Transport kann sehr zeit- und kostenaufwendig sein, insbesondere dann, wenn die Strecken sehr lang sind und die Infrastruktur ungeeignet ist. Bekannt ist auch der Einsatz von "Leichter als Luft"-Fahrzeugen in vielfältigen Möglichkeiten von Anwendungen sowohl im zivilen als auch im militärischen Bereich. So wurde vorgeschlagen, große und schwere Güter mit einem Luftschiff oder geschleppten Ballons zu transportieren, wobei die Last bei Luftschiffen auf einer absenkbaren Plattform und bei geschleppten Ballons, wie beim CL 75, in einem Lastrahmen untergebracht ist. Aus der DE 102 10 540 A1 ist ein seilgeführter Auftriebskörper, insbesondere zum Umsetzen von Lasten bekannt, der über mindestens drei am Boden verankerte Zugseile gefesselt ist, deren freie Länge über zugeordnete, ferngesteuerte Bodenwinden veränderbar ist. Die Takelung des Ballons ist auf einen Ballonknoten geführt, der über ein Zwischenseil mit einem Kranknoten verbunden ist, von dem die Fesselseile und ein Hakenseil mit Kranhaken abzweigen. Die Bodenwinden für die Zugseile und ein zusätzliches Kranseil können nach der WO 00/66424 A auch auf Lastkraftwagen angeordnet sein.

Zur Aufhängung und Lagestabilisierung einer Last an einem gefesselten Ballon ist aus der GB 20119 A A.D. bekannt, unmittelbar am Ballonknoten ein Kardangelenk anzuordnen. Zur ungehinderten Führung des Halteseils muss die Fesselung an der Last vorbei geleitet werden. Das erfolgt über Jochstücke am Kardangelenk und mit vertikalem Abstand zu diesem am Halteseil. Damit kann die Last weder eine größere Breite noch Länge/Höhe aufweisen.

Zum Transportieren von schweren Lasten in Gebieten mit schwacher Infrastruktur und Böden mit niedriger Lastaufnahmefähigkeit ist in der DE 102 26 868 Al ein Lasttransporter mit einem Kettenfahrzeug beschrieben, der mit einem "Leichter als Luft"-Fahrzeug verbunden ist, dessen Auftriebskraft mindestens teilweise dem Gewicht der Ladung entspricht. Bei Verwendung zum Be- und Entladen ist die Auftriebskraft des Aerostaten größer als das Gewicht der Ladung und kleiner als das Fahrzeug mit Ladung. Der Lasttransporter enthält eine Kranwinde, ein mit dem Lastknoten verbundenes Windenseil und zwei mit je einem Flaschenzug verbundene Zwischenseile.

Der Erfindung liegt das Problem zugrunde, ein Verfahren und eine Anordnung zum Transport von langgestreckten, sperrigen Gütern über weite Strecken hinweg auch bei nicht vorhandener oder für herkömmliche Transportmethoden ungeeigneter Infrastruktur vorzuschlagen.

Das Problem wird erfindungsgemäß gelöst durch die Merkmale der Ansprüche 1 und 2. Vorteilhafte Weiterbildungen Erfindung sind in den abhängigen Ansprüchen erfasst.

Erfindungsgemäß ist der Auftriebskörper mit einer darunter hängenden Vorrichtung oder einem Gestell ausgestattet, in welche das Transportgut im Schwerpunkt eingespannt wird. Gefesselt und geführt wird der Auftriebskörper durch steuerbare Winden, die auf mindestens einer mobilen Einheit montiert sind, zum Beispiel auf Lastkraftwagen. Je nach Gegebenheiten ermöglichen 2 - 3 Lastkraftwagen mit aktiv gesteuerten Winden eine größtmögliche Flexibilität um Hindernissen auszuweichen.

Die Flughöhe und Flugrichtung des Auftriebskörpers samt Ladung wird bestimmt durch die Bewegung der mobilen Einheiten und die Längenveränderung der Fesselseile. Der Auftriebskörper kann beliebig horizontal und vertikal geführt werden und so das Transportgut Hindernissen ausweichen und trotzdem stets in der Waagerechten bleiben und sich stets in den Wind drehen, um somit den geringsten Widerstand zu bieten.

Das Transportsystem besteht aus mehreren Bestandteilen. Bei dem eigentlichen kugelförmigen Auftriebskörper handelt es sich um einen Ballon oder Aerostaten aus einer speziellen Membran, welcher zur Aufnahme des Traggases (Wasserstoff oder Helium) dient. Die Tragkraft wird durch das Volumen des Ballons und durch das verwendete Traggas bestimmt. Die Erhöhung der Tragkraft ist grundsätzlich durch die Verwendung eines größeren Ballons möglich. Die verwendete Größe des Auftriebskörpers bestimmt sich hauptsächlich durch die zu transportierende Last. Der eigentliche Auftriebskörper wird von einem Netz oder einer anderen geeigneten Halterung umfasst, an welchem im unteren Bereich am Ballon-Knotenpunkt das Trageseil befestigt ist. Das Netz ist mit weiteren Vorrichtungen ausgestattet, an denen Seile zur Sicherung des Auftriebskörpers angebracht werden können, um diesen zum Beispiel bei Sturm am Boden zu sichern.

Am Ende des Tragseiles befindet sich die Lastaufnahmeeinheit, welche speziell auf die zu transportierende Last zugeschnitten ist. Tragseil und Lastaufnahmeeinheit sind durch ein drehbares Gelenk verbunden, damit sich die zu transportierende Last im Wind ausrichten und durch ein Kippgelenk an der Lastaufnahmeeinheit waagerecht halten kann und dadurch die Windangriffsfläche verringert wird und ein sicherer Transport gewährleistet werden kann. Die Lastaufnahmeeinheit wird speziell an die Form des Transportgutes angepasst. Um ein Verrutschen der Last zu verhindern wird diese an der Lastaufnahmeeinheit gesichert. Hierfür eigenen sich je nach Last verschiedene Methoden, wie zum Beispiel das Abspannen mit Seilen oder die Sicherung durch Bolzen. Eine auf das Transportgut zugeschnittene Polsterung verhindert Schäden am Transportgut. Am unteren Teil der Lastaufnahmeeinheit sind die Verbindungseile zu den mobilen Winden befestigt. Je nach Einsatzgebiet und -art sind ein bis drei mobile Windenträger erforderlich. Sobald mehr als ein mobiler Windenträger erforderlich ist, erfolgt die Verbindung der Zugseile mit der Lastaufnahmeeinheit mittels eines drehbar gelagerten Zwei- bzw. Dreispanns (Drallfänger), um ein Verknoten der Zugseile zu verhindern. Die Zugseile laufen auf handelsübliche Kranwinden, die auf einer mobilen Transporteinheit befestigt sind. Als mobile Transporteinheiten eignen sich grundsätzlich verschiedene Transportfahrzeuge, insbesondere Lastkraftwagen. Aber auch eine schienengeführte Transporteinheit ist denkbar.

Das vorgeschlagene erfinderische Verfahren ermöglicht den Transport von langgestreckten, sperrigen Gütern über weite Strecken hinweg, wobei der Transport auch die Aufnahme und das Absetzen der Last beinhaltet. Anlass der Entwicklung des Systems ist der Transport von Flügeln für Windkraftanlagen in bergigen Regionen, in denen ein normaler Sattelschleppertransport durch die extrem kurvige Straßenführung nur sehr aufwändig möglich ist. Das Transportsystem ist aber auch für vielfältige andere Transportgüter geeignet, z. B. lange Rohre mit großem Durchmesser. Der Einsatz ist insbesondere dann sinnvoll, wenn die Infrastruktur für herkömmliche Transportmethoden nicht vorhanden oder ungeeignet ist. Auch Böden mit geringer Lastaufnahmefähigkeit können zum Transport besser genutzt werden.

Die Erfindung wird nachfolgend an einem schematischen Ausführungsbeispiel näher erläutert.

Die zugehörige Zeichnung zeigt in:
- Fig. 1:: Transportsystem mit versetzter Fahrweise der Windenträger auf Serpentinen in bergigen Regionen;
- Fig. 2:: Transportsystem beim Transport eines Flügels für Windkraftanlagen über kurvenreiche Strecken;
- Fig. 3:: Transportsystem mit möglichen Windeinwirkungen;
- Fig. 4:: Lastaufnahmeeinheit mit eingespanntem Flügel und drehbaren Verbindungen zum Auftriebskörper und zu den Zugseilen;
- Fig. 5:: Flügel in geöffneter Lastaufnahmeeinheit und bei Einsatz eines Personenaufzuges;
- Fig. 6:: Flügel in geschlossener Lastaufnahmeeinheit und bei Einsatz eines Personenaufzuges ;
- Fig. 7:: Einsatz als Ballonkran bei der Montage eines Flügels am Generator mit manueller Sicherung gegen Windeinflüsse.

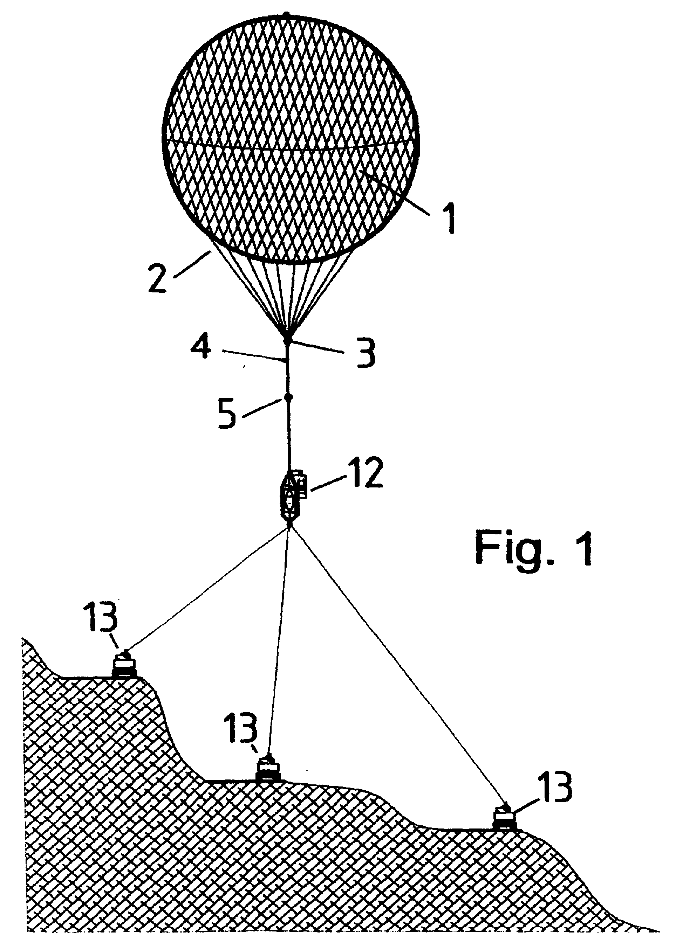

Das in Fig. 1 dargestellte Transportsystem mit versetzter Fahrweise der auf Lastkraftwagen montierten Windenträger 13 auf Serpentinen in bergigen Regionen verwendet als Auftriebskörper einen Ballon 1 mit einem Ballonnetz 2, wobei die unteren Enden des Ballonnetzes 2 in einem Ballon-Knotenpunkt 3 zusammengefasst sind. Der Auftriebskörper 1 kann eine beliebige Form aufweisen und außer über ein Ballonnetz 2 auch über andere bekannte Verbindungen an den Ballon-Knotenpunkt 3 angekoppelt sein. Die ein langgestrecktes, sperriges Gut aufnehmende Lastaufnahmeeinheit 12 ist mit dem Ballon-Knotenpunkt 3 über ein unteres Tragseil 7, einen Kran-Knotenpunkt 4 und ein oberes Tragseil 4 und über Zugseile 18 mit den Winden auf den mobilen Transporteinheiten 13 verbunden. Die Einfügung des Kran-Knotenpunktes 4 und damit eine Unterteilung des Tragseiles in ein unteres Tragseil 7 und oberes Tragseil 4 entkoppelt bei Wind teilweise die Bewegung der Last 15, insbesondere beim Einsatz als Kran, von der Bewegung des Auftriebskörpers 1.

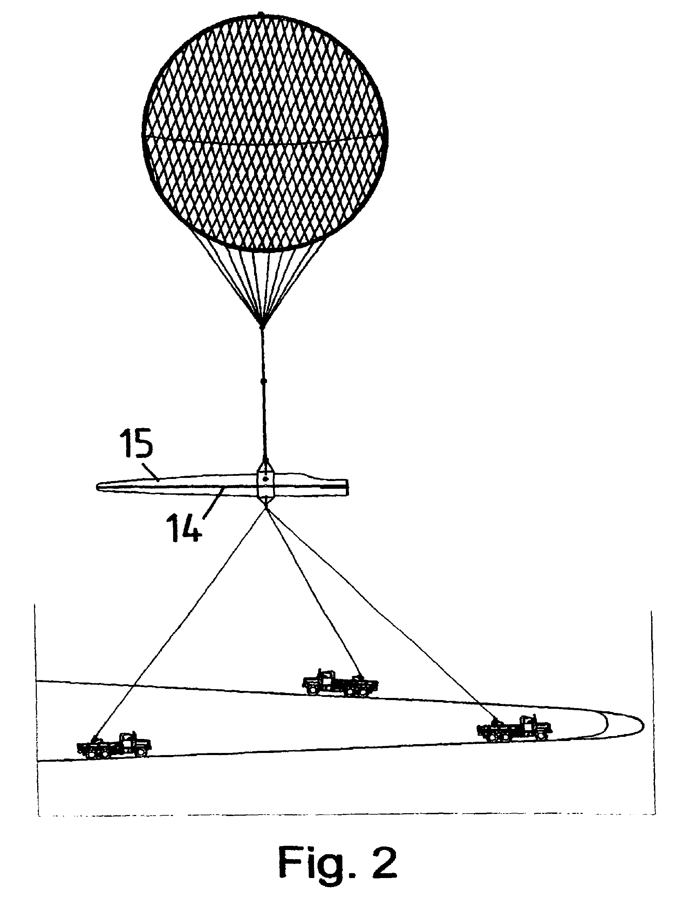

Die Fig. 2 zeigt den Transport eines Flügels für Windkraftanlagen als Transportgut 15 über kurvenreiche Strecken mit auf Lastkraftwagen montierten Windenträgern, wobei der Flügel 15 durch eine Fesselung 14, z. B. mittels Gurt gesichert ist.

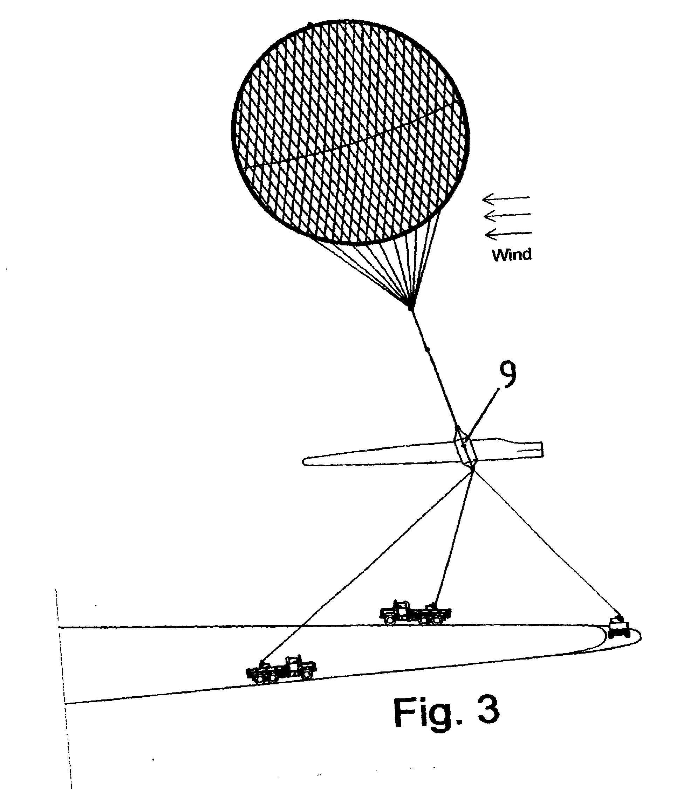

In Fig. 3 ist das Transportsystem mit möglichen Windeinwirkungen dargestellt, wobei sich der Flügel 15 durch das Kippgelenk 9 der Lastaufnahmeeinheit 12 selbsttätig in der waagerechten Lage hält.

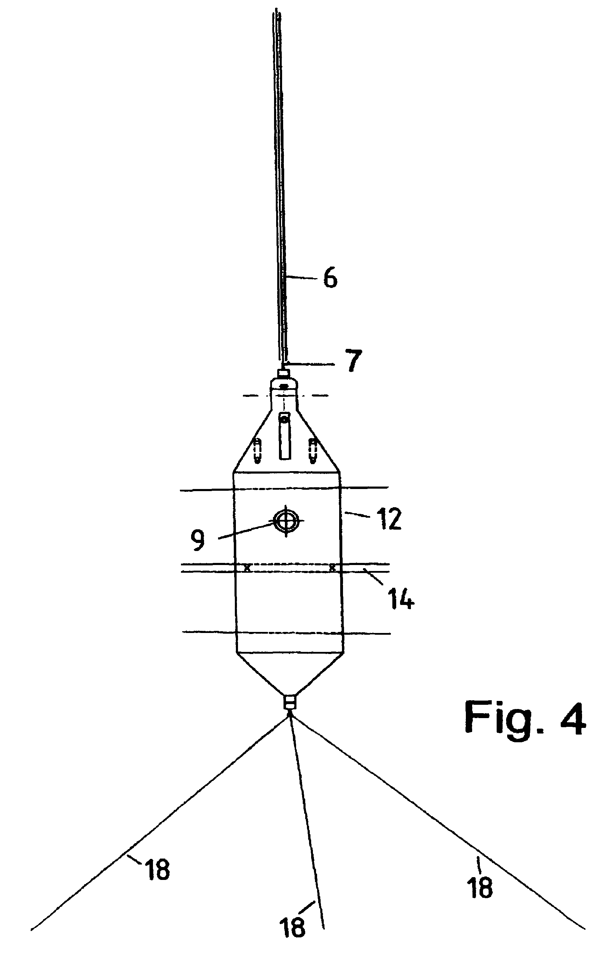

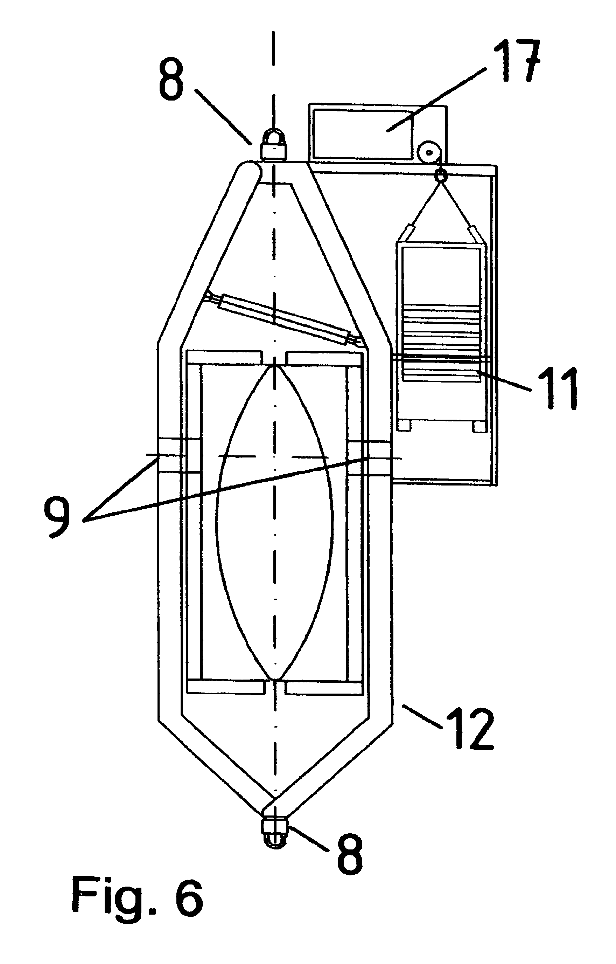

Die Fig. 4 zeigt die Lastaufnahmeeinheit 12 mit eingespanntem und durch einen Gurt als Fesselung 14 gesichertem Flügel 15 drehbaren Verbindungen zum Auftriebskörper 1 und zu den Zugseilen 18. Die Lastaufnahmeeinheit 12 weist dazu wie in Fig. 6 näher dargestellt, für das untere Tragseil 7 und die Zugseile 18 Drallfänger 8 auf. Am Kran-Knotenpunkt 5 sind außer dem unteren Tragseil 7 noch für einen Kranbetrieb die Kranseile 6 angeordnet.

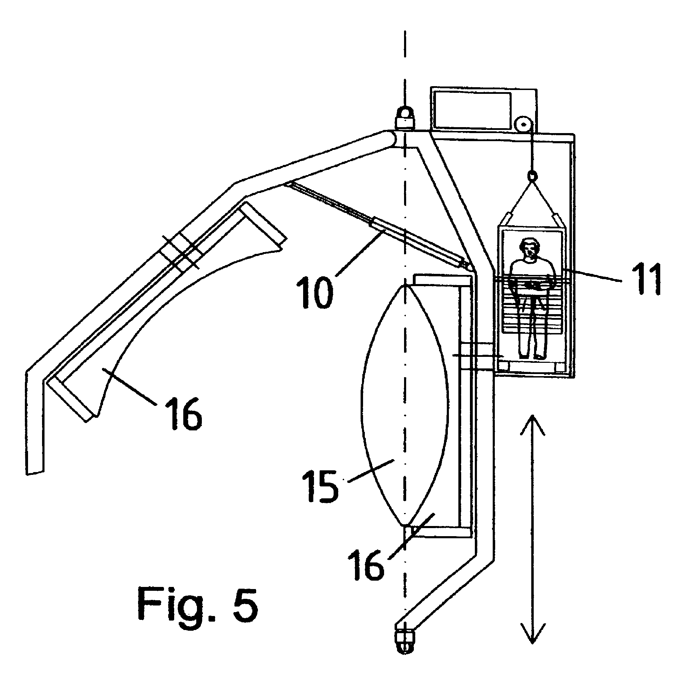

In den Fig. 5 und 6 sind Flügel 15 in geöffneter und geschlossener Lastaufnahmeeinheit 12 mit einem Fahrkorb bei Einsatz eines Personenaufzuges 11 dargestellt. Die Lastaufnahmeeinheit 12 stellt eine stabile Konstruktion in geeigneter Ausführung, z. B. in Form eines Gestells aus zwei Teilen, die an einem Ende drehbar gelagert sind und mit einer Hydraulik 10 geöffnet und nachdem das Transportgut 15 eingelegt ist, sicher geschlossen werden können. Die beiden sich gegenüber liegenden Innenflächen weisen schalenförmige Polsterungen 16 in der Form des halbierten Querschnitts des Transportgutes 15, im Ausführungsbeispiel des Flügels 15 auf. Werden lange Rohre transportiert, werden die Polsterungen 16 einen halbkreisförmigen Querschnitt aufweisen. Die Lastaufnahmeeinheit 12 kann so ausgeführt werden, dass an seinem bei Öffnung senkrecht stehenden Teil ein Personenaufzug 11 mit einer Winde 17 für einen Fahrkorb angeordnet ist. In Fig. 6 sind an der Ober- und Unterseite der hängenden Lastaufnahmeeinheit 12 jeweils Drallfänger 8 und kurz oberhalb des Schwerpunktes an den gegenüber liegenden Seiten die Kippgelenke 9 angeordnet.

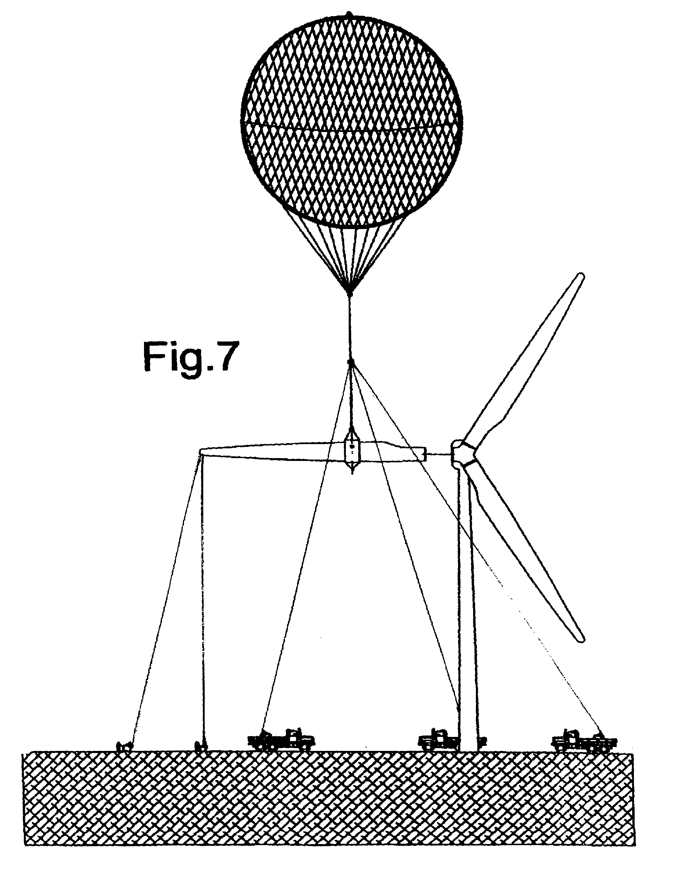

Die Fig. 7 zeigt den Einsatz der Erfindung als Ballonkran bei der Montage eines Flügels einer Windkraftanlage am Generator mit manueller Sicherung gegen Windeinflüsse. Dazu werden die drei Kranseile 6 vom Kran-Knotenpunkt 5 mit den Winden 13 auf den mobilen Transporteinheiten verbunden und die erforderliche Position des Ballons 1 durch geeignete Veränderung der Längen der einzelnen Winden 13 eingenommen. Die manuelle Sicherung gegen Windeinflüsse erfolgt über zwei am Flügelende angebrachte Seile durch kleine Winden.

Der Transportablauf gestaltet sich folgendermaßen: Das zu transportierende Gut wird am Abladeplatz in Position gebracht und gesichert. Der Auftriebskörper samt Lastaufnahmeeinheit wird oberhalb des Transportgutes in Position gebracht. Die mobilen Windenträger werden um das Transportgut aufgestellt. Das Transportgut wird in die Lastaufnahmeeinheit eingespannt und je nach Bedarf gesichert. Es erfolgt ein Anheben des Transportgutes durch den Auftriebskörper und das Abrollen der Führungseile von den Winden oder einer Ortsveränderung der mobilen Windenträger. Navigiert werden die Auftriebskörper samt Transportgut durch die versetzte Bewegung der Transportfahrzeuge und Längenänderung der Führungsseile. Das Absetzen geschieht in umgekehrter Reihenfolge oder wird gleich an die Montageposition (z.B. Generator an Windkraftanlagen) gebracht und durch eine Verbindung der am oberen Kranknotenpunkte angebrachten Seile mit am Boden stehenden Winden von der Ballonbewegung entkoppelt und genau zur Verschraubung positioniert. Damit bietet diese Ausführung eine gleichzeitige Kranfunktion mit an.

### Aufstellung der verwendeten Bezugszeichen und Begriffe

- 1: Ballon
- 2: Ballonnetz
- 3: Ballon-Knotenpunkt
- 4: oberes Tragseil
- 5: Kran-Knotenpunkt
- 6: Kranseile
- 7: unteres Tragseil
- 8: Drallfänger
- 9: Kippgelenk
- 10: Hydraulik
- 11: Personenaufzug
- 12: Lastaufnahmeeinheit
- 13: Winde auf mobiler Transporteinheit
- 14: Fesselung von 15
- 15: Transportgut
- 16: Polsterung
- 17: Winde für Personenaufzug
- 18: Zugseile

## Patentansprüche

1. Verfahren zum Transport von langgestreckten, sperrigen Lasten mit einem seilgeführten Auftriebskörper, **dadurch gekennzeichnet, dass** der Transport mit einer, mit mindestens einer mobilen steuerbaren Winde (13) über je ein Zugseil (18) und mit dem Auftriebskörper (1) über ein Tragseil (4; 7) verbundenen, dreh- und kippbaren Lastaufnahmeeinheit (12) so durchgeführt wird, dass sich die sperrige, in der Lastaufnahmeeinheit (12) in waagerechter Lage formschlüssig im Schwerpunkt eingespannte langgestreckte Last (15) während des Transports selbständig in den Wind drehen und die waagerechte Lage einhalten kann.

2. Anordnung zum Transport von langgestreckten, sperrigen Lasten mit einem seilgeführten Auftriebskörper, **dadurch gekennzeichnet, dass** mindestens eine mobile steuerbare Winde (13) über je ein Zugseil (18) und ein unteres drehbares Gelenk (8) mit einer zu öffnenden, mit einem dreh-/kippbaren Gelenk (9) ausgerüsteten, an die äußere Form der langgestreckten Last (15) angepassten und diese im Schwerpunkt in waagerechter Lage durch Formschluss fixierenden Lastaufnahmeeinheit (12) und diese über ein oberes drehbares Gelenk (8) mit einem Tragseil (7; 4) und dieses mit dem Auftriebskörper (1) verbunden sind.

3. Anordnung nach Anspruch 2, **dadurch gekennzeichnet, dass** der Auftriebskörper (1) ein Ballon oder Aerostat ist.

4. Anordnung nach den Ansprüchen 2 und 3, **dadurch gekennzeichnet, dass** der Auftriebskörper (1) eine geeignete Halterung (2) enthält, an der an seinem unteren Ende das Tragseil (4; 7) befestigt ist.

5. Anordnung nach Anspruch 4, **dadurch gekennzeichnet, dass** ein Ballon (1) ein Ballonnetz (2) aufweist, das in einem Ballon-Knotenpunkt (3) zur Verbindung mit dem oberen Tragseil (4) zusammengefasst ist.

6. Anordnung nach Anspruch 2, **dadurch gekennzeichnet, dass** die mobile steuerbare Winde (13) eine auf einem Lastkraftwagen angeordnete steuerbare Winde ist.

7. Anordnung nach den Ansprüchen 2 und 6, **dadurch gekennzeichnet, dass** die Zugseile (18) mehrerer steuerbarer Winden (13) über einen drehbar gelagerten Drallfänger (8) mit der Lastaufnahmeeinheit (12) verbunden sind.

8. Anordnung nach den Ansprüchen 2 und 7, **dadurch gekennzeichnet, dass** die Lastaufnahmeeinheit (12) über eine Fernsteuerung zu öffnen ist.

9. Anordnung nach den Ansprüchen 2, 7 und 8, **dadurch gekennzeichnet, dass** in der Lastaufnahmeeinheit (12) zwei an den Querschnitt der Last (15) angepasste, über ein kurz oberhalb des Schwerpunktes angeordnetes Kippgelenk (9) drehbar gelagerte Halbschalen mit Polsterung (16) angeordnet sind.

10. Anordnung nach den Ansprüchen 2 bis 5, **dadurch gekennzeichnet, dass** das obere Tragseil (4) vom Ballon-Knotenpunkt (3) zum Kran-Knotenpunkt (5) und das untere Tragseil (7) vom Kran-Knotenpunkt (5) zum oberen Drallfänger (8) der Lastaufnahmeeinheit (12) geführt ist.

11. Anordnung nach Anspruch 10, **dadurch gekennzeichnet, dass** diese mehrere, während des Transports am unteren Drallfänger (8) und während der Kranarbeiten am Kranknotenpunkt (5) lösbar befestigte Kranseile (6) aufweist.

12. Anordnung nach den Ansprüchen 2 und 7 bis 9, **dadurch gekennzeichnet, dass** im Drehpunkt der bewegbaren Hälften der Lastaufnahmeeinheit (12) nach der nicht öffnenden Seite ein Träger mit einer Winde (17) und einer Führung für den Fahrkorb eines Personenaufzuges (11) angeordnet ist.

13. Anordnung nach den Ansprüchen 2 und 9, **dadurch gekennzeichnet, dass** die langgestreckte, sperrige Last (15) ein Flügel für eine Windkraftanlage ist.

## Claims

1. Method for transporting of elongated, bulky loads by means of a cable-guided lift body, **characterised in that** the transport is carried out by a rotatable and tiltable load bearing unit (12) connected to at least one mobile, controllable winch (13) via a hauling cable (18), respectively, and connected to the lift body (1) via a supporting cable (4; 7) in such a way that the bulky, elongated load (15) clamped in the load bearing unit (12) in horizontal position at the centre of gravity in a form-locking manner can freely rotate in the direction of the wind during transport and maintain the horizontal position.

2. Arrangement for transporting of elongated, bulky loads by means of a cable-guided lift body, **characterised in that** at least one mobile, controllable winch (13) is connected to a load bearing unit (12) which is to be opened, provided with a rotatable/tiltable joint (9), adapted to the external shape of the elongated load (15), and form-lockingly fixing the elongated load (15) at the centre of gravity in horizontal position, via a hauling cable (18), respectively, and a lower rotatable joint (8), the load bearing unit (12) being connected to a supporting cable (7; 4) via an upper rotatable joint (8), the supporting cable (7; 4) being connected to the lift body (1).

3. Arrangement according to claim 2, **characterised in that** the lift body (1) is a balloon or an aerostat.

4. Arrangement according to claims 2 and 3, **characterised in that** the lift body (1) includes an appropriate holder (2) to which the supporting cable (4; 7) is attached at the lower end thereof.

5. Arrangement according to claim 4, **characterised in that** a balloon (1) comprises a balloon web (2) which is combined into a balloon node (3) for the connection to the upper supporting cable (4).

6. Arrangement according to claim 2, **characterised in that** the mobile, controllable winch (13) is a controllable winch disposed on a truck.

7. Arrangement according to claims 2 and 6, **characterised in that** the hauling cables (18) of several controllable winches (13) are connected to the load bearing unit (12) via a rotatably mounted twist arrestor (8).

8. Arrangement according to claims 2 and 7, **characterised in that** the load bearing unit (12) can be opened via a remote control.

9. Arrangement according to claims 2, 7 and 8, **characterised in that** two half-shells having a padding (16) which are adapted to the cross-section of the load (15) and rotatably moulted via a tiltable joint (9) disposed closely above the centre of gravity are disposed in the load bearing unit (12).

10. Arrangement according to claims 2 to 5, **characterised in that** the upper supporting cable (4) is guided from the balloon node (3) to the crane node (5) and the lower supporting cable (7) is guided from the crane node (5) to the upper twist arrestor (8) of the load bearing unit (12).

11. Arrangement according to claim 10, **characterised in that** it comprises several crane cables (6) detachably fixed to the lower twist arrestor (8) during the transport and detachably fixed to the crane node (5) during the work of the crane.

12. Arrangement according to claims 2 and 7 to 9, **characterised in that** a support having a winch (17) and a guiding for the cage of a passenger hoist (11) is disposed at the centre of rotation of the movable halves of the load bearing unit (12) to the non-opening side.

13. Arrangement according to claims 2 and 9, **characterised in that** the elongated, bulky load (15) is a blade of a wind turbine.

## Revendications

1. Procédé de transport de charges allongées, volumineuses par un corps de portance guidé par un câble, **caractérisé en ce que** le transport est effectué par une unité (12) de réception de charge rotative et basculante reliée à au moins un treuil (13) mobile, commandable par un câble (18) tracteur, respectivement, et reliée au corps (1) de portance par un câble (4 ; 7) porteur de manière à ce que la charge (15) volumineuse, allongée, serrée dans l'unité (12) de réception de charge au centre de gravité en position horizontale par liaison de forme puisse se tourner dans la direction du vent de façon autonome, et maintenir la position horizontale.

2. Dispositif de transport de charges allongées, volumineuses par un corps de portance guidé par un câble, **caractérisé en ce qu'**au moins un treuil (13) mobile, commandable est relié, par un câble (18) de traction, respectivement, et une articulation (8) mobile inférieure, à une unité (12) de réception de charge à ouvrir, prévue d'une articulation (9) rotative/basculante, adaptée à la forme extérieure de la charge (15) allongée, et fixant celle-ci au centre de gravité en position horizontale par liaison de forme, l'unité (12) de réception de charge étant reliée à un câble (7 ; 4) porteur par une articulation (8) rotative supérieure, le câble (7 ; 4) porteur étant relié au corps (1) de portance.

3. Dispositif selon la revendication 2, **caractérisé en ce que** le corps (1) de portance est un ballon ou un aérostat.

4. Dispositif selon les revendications 2 et 3, **caractérisé en ce que** le corps (1) de portance contient un dispositif de maintien (2) approprié auquel le câble (4 ; 7) porteur est fixé à l'extrémité inférieure de celui-ci.

5. Dispositif selon la revendication 4, **caractérisé en ce qu'**un ballon (1) comprend un filet (2) de ballon qui est combiné dans un noeud (3) de ballon pour la liaison au câble (4) porteur supérieur.

6. Dispositif selon la revendication 2, **caractérisé en ce que** le treuil (13) mobile, commandable est un treuil commandable qui est disposé sur un camion.

7. Dispositif selon les revendications 2 et 6, **caractérisé en ce que** les câbles (18) tracteurs de plusieurs treuils (13) commandables sont reliés à l'unité (12) de réception de charge par un dispositif anti-torsion (8) monté de façon pivotante.

8. Dispositif selon les revendications 2 et 7, **caractérisé en ce que** l'unité (12) de réception de charge peut être ouverte par une télécommande.

9. Dispositif selon les revendications 2, 7 et 8, **caractérisé en ce que** deux demi-coques ayant un rembourrage (16), adaptées à la section transversale de la charge (15), montées de façon pivotante par une articulation (9) basculante disposée juste au-dessus du centre de gravité, sont disposées dans l'unité (12) de réception de charge.

10. Dispositif selon les revendications 2 à 5, **caractérisé en ce que** le câble (4) porteur supérieur est guidé du noeud (3) de ballon au noeud (5) de grue, et que le câble (7) porteur inférieur est guidé du noeud (5) de grue au dispositifanti-torsion (8) supérieur, de l'unité (12) de réception de charge.

11. Dispositif selon la revendication 10, **caractérisé en ce que** celui-ci comprend plusieurs câbles (6) de grue fixées de manière amovible au dispositif anti-torsion (8) inférieur pendant le transport, et fixées de manière amovible au noeud (5) de grue pendant le travail de la grue.

12. Dispositif selon les revendications 2 et 7 à 9, **caractérisé en ce qu'**un support ayant un treuil (17) et un guidage pour la cabine d'un ascenseur (11) est disposé au centre de rotation des moitiés mobiles de l'unité (12) de réception de charge, vers le côté non ouvrant.

13. Dispositif selon les revendications 2 et 9, **caractérisé en ce que** la charge (15) allongée, volumineuse est une pale d'une éolienne.
